# EUROPEAN PATENT APPLICATION

(11) **EP 0 883 060 A2**
(43) Date of publication of application: **09.12.1998**
(21) Application number: 98110321.1
(22) Date of filing: 05.06.1998
(51) Int. Cl.: G06F 9/45

(54) **Compiler capable of carrying out both size optimization and speed optimization**

(30) Priority: 06.06.1997 JP 149222/97
(71) Applicant: NEC CORPORATION, Tokyo (JP)
(72) Inventor: Isozaki, Hiroko, Minato-ku, Tokyo (JP)
(74) Representative: Betten & Resch

(57) **Abstract**

In a compiler, a syntactical analysis section (1021') performs a syntactical analysis upon source programs to generate an intermediate code (C₁). A speed optimization function recognition processing section (1021a) extracts a first function to be processed for speed optimization from the intermediate code, and a function calling/relationship analysis section (1021b) finds a relationship between the first function and a second function to be called only by the first function. A speed optimization processing function registering section (1025) registers the first and second functions. An optimization processing section (1022') performs a speed optimization processing upon functions of the intermediate code which coincide with one of the first and second functions, and performs a size optimization processing upon functions of the intermediate code which do not coincide with either of the first and second functions.

## Description

### BACKGROUND OF THE INVENTION

### Field of the Invention

The present invention relates to a compiler for translating a source program into an object program.

### Description of the Related Art

A compiler is a processing apparatus for translating a source program into an object program written in another language, i.e., a machine program.

Generally, an object program generated by a compiler is required to have a high speed performance and, at the same time, have a small size, i.e., require only a small memory capacity. Therefore, a compiler is adapted to carry out an optimization processing for improving the execution speed of the object program, which is referred to as a speed optimization and an optimization processing for reducing the object size, which is referred to as a size optimization.

In a prior art compiler, either a size optimization processing or a speed optimization processing is designates for the source program. In other words, the identical optimization processing is carried out for all the functions of the source program, because the size optimization and speed optimization contradict each other and cannot be made effective simultaneously. This will be explained later in detail.

Meanwhile, techniques are known for performing an in-line expansion only for specific functions. For example, use is made of an in-line expansion statement " #pragma inline" that allows an in-line expansion to be performed for function "funcl" and function "func 2" at each calling by specifying:
#pragma inline funcl, func2.
(see: NEC User's Manual "CA732/CA830/CA850 V800 Series C Compiler Package, pp. 61-62, August 1996). Thus, an in-line expansion can be performed for specific functions by using the above statement in order to improve the execution speed for an object program.

As systems designed by users tend to include a variety of functional features in recent years, complex application programs are prepared to increase the object size. As a result of the advancement in the memory technology for storing application programs, means have been provided to store large object programs. However, the storage capacity of a memory is desirably reduced as much as possible to lower the cost of the system so that the use of object programs having a reduced size is desired in the field of microcomputers to be installed in apparatuses.

Meanwhile, an interrupt processing is typically utilized for a system to deal with a variety of different functional features. What is important for an interrupt is to carry out a function i.e., an interrupt function to be executed for the interrupt at high speed to move to the next processing operation as quickly as possible. Therefore, such an interrupt function is desirably processed for speed optimization to improve the execution speed.

Thus, in technological fields using microcomputers to be installed in apparatuses, more often than not, source programs are optimized for size, and only interrupt functions, the execution speed of which needs to be improved, are subjected to speed optimization.

However, with the prior art compiler adapted to optimize only either the size or the speed for a single source program file as described above, a user who wants to improve the execution speed for certain functions such as interrupt functions is required to write them in separate source program files and specify speed optimization only for the source program files, while specifying size optimization for the source program files where the remaining functions are written.

With such a technique, however, software designers are forced to face a reduced efficiency in designing source programs in order to make the programs adapted for the user to pick up the functions, for which the user wants to improve the execution speed, and store them in separate files.

Additionally, there is a problem of an increased object size when in-line expansion is specified for a function that is called by both a function for which the user wants to improve the execution speed, and another function, for which the user wants to reduce the code size, because an in-line expansion is inevitably performed for a different function for which the user wants to reduce the code size.

Thus, there is a need for a sophisticated arrangement where an in-line expansion can be performed for a function for which the user wants to improve the execution speed, while no in-line expansion is performed for a function for which the user wants to reduce the code size.

### SUMMARY OF THE INVENTION

It is an object of the present invention to provide a compiler that can freely specify a function for which a speed optimization processing is to be executed in order to obtain an object program having a desired execution speed and a desired size.

According to the present invention, in a compiler, a syntactical analysis section performs a syntactical analysis upon source programs to generate an intermediate code. A speed optimization function recognition processing section extracts a first function to be processed for speed optimization from the intermediate code, and a function calling/relationship analysis section finds a relationship between the first function and a second function to be called only by the first function. A speed optimization processing function registering section registers the first and second functions. An optimization processing section performs a speed optimization processing upon functions of the intermediate code which coincide with one of the first and second functions, and performs a size optimization processing upon functions of the intermediate code which do not coincide with either of the first and second functions.

### BRIEF DESCRIPTION OF THE DRAWINGS

The present invention will be more clearly understood from the description as set forth below, as compared with the prior art, with reference to the accompanying drawings, wherein:
Fig. 1 is a block circuit diagram illustrating a prior art compiler;
Fig. 2 is a program list of the source program of Fig. 1;
Figs. 3 and 4 are program lists of the object programs of Fig. 1;
Fig. 5 is a table showing the code sizes and the number of clock signals of statements of the object codes of Figs. 3 and 4;
Fig. 6 is a block circuit diagram illustrating an embodiment of the compiler according to the present invention;
Figs. 7A and 7B are flowcharts showing a first operation of the compiler of Fig. 6;
Fig. 8 is a diagram illustrating an example of a statement in interrupt functions written in the C language;
Fig. 9 is a diagram showing a calling/called relationship of function "func", function "main" and function "plus" of Fig. 2;
Fig. 10 is a program list of the object program of Fig. 6;
Figs. 11A and 11B are flowcharts showing a second. operation of the compiler of Fig. 6; and
Fig. 12 is a diagram illustrating an example of a statement for specifying functions as an object of speed optimization.

### DESCRIPTION OF THE PREFERRED EMBODIMENTS

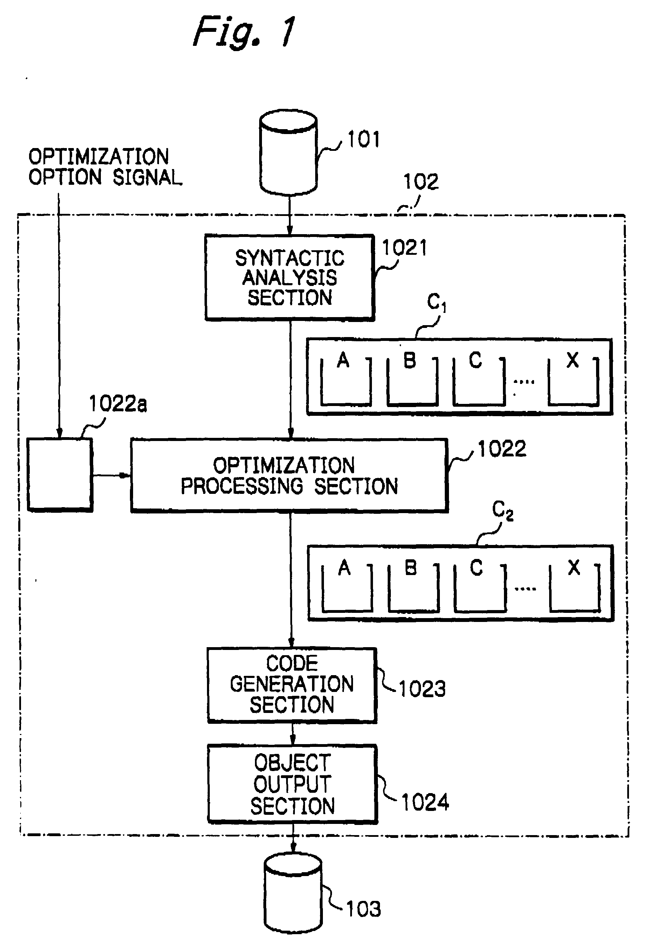

Before the description of the preferred embodiment, a prior art compiler will be explained with reference to Figs. 1, 2, 3, 4 and 5.

In Fig. 1, which illustrates a prior art compiler, a source program is supplied from a source program file 101 to a compiler 102. After the compiler 102 transforms the source program into an object program, the object program is supplied to an object module file 103.

The compiler 102 is constructed by a syntactical analysis section 1021 for generating a first intermediate code C₁ in a format adapted to compiling processing by performing a syntactic analysis upon the source program. Also, an optimization processing section 1022 performs either a size optimization processing or a speed optimization processing upon functions "A", "B", ···, "X" of the first intermediate code C₁ in accordnace with an optimization selection signal of an optimization selecting section 1022a. Note that the optimization selection section 1022a receives an optimization option signal from the exterior and holds it.

Further, a code generation section 1023 generates an object code from a second intermediate code C ₂ generated from the optimization processing section 1022, and an object output seciton 1024 cutputs the object code to the object module file 103.

In Fig. 1, either a size optimization processing or a speed optimization processing is designated by the optimization selection signal for the source program of the source program file 101. In other words, the identical optimization processing is carried out for all the functions in the first intermediate code C₁, because the size optimization and the speed optimization contradict each other and cannot be made effective simultaneously.

For example, in-line expansion is known as technique for speed optimization. The in-line expansion is a technique of preventing overhead due to a processing which involves calling functions and improving the program execution speed, while it accompanied by a drawback of requiring the program processed to have a relatively large size.

Therefore, generally, when the size optimization is designated no in-line expansion will be performed because of an increased object size. On the other hand, when the speed optimization is designated an in-line expansion will be performed because an improved object execution speed is expected.

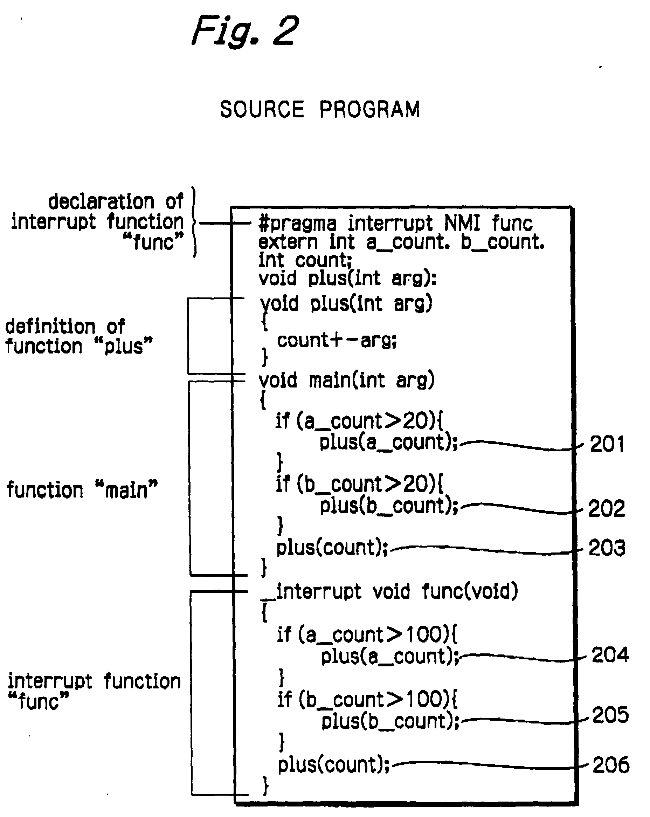

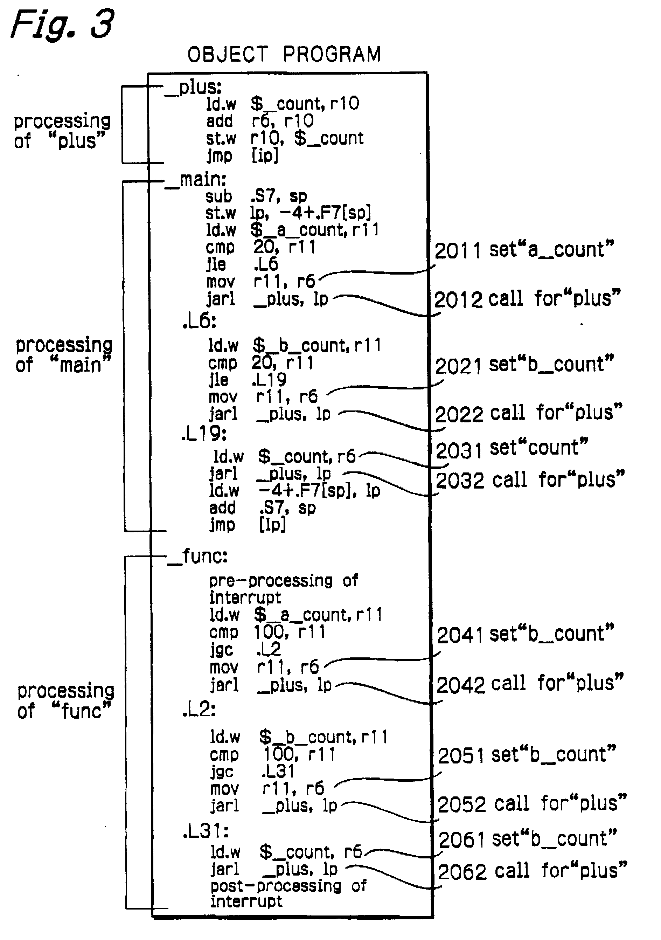

When a source program written in the C language as shown in Fig. 2 is subjected to the size optimization and compilation in the compiler 102, an object program as shown in Fig. 3 will be output.

Since no in-line expansion is performed in the compiler 102, statements 201 through 206 for calling function "plus" in the source program of Fig. 2 will be compiled into statements 2011, 2021, 2031, 2041, 2051 and 2061 for setting an argument and statements 2012, 2022, 2032,2042, 2052 and 2062 for calling function "plus" of Fig. 3.

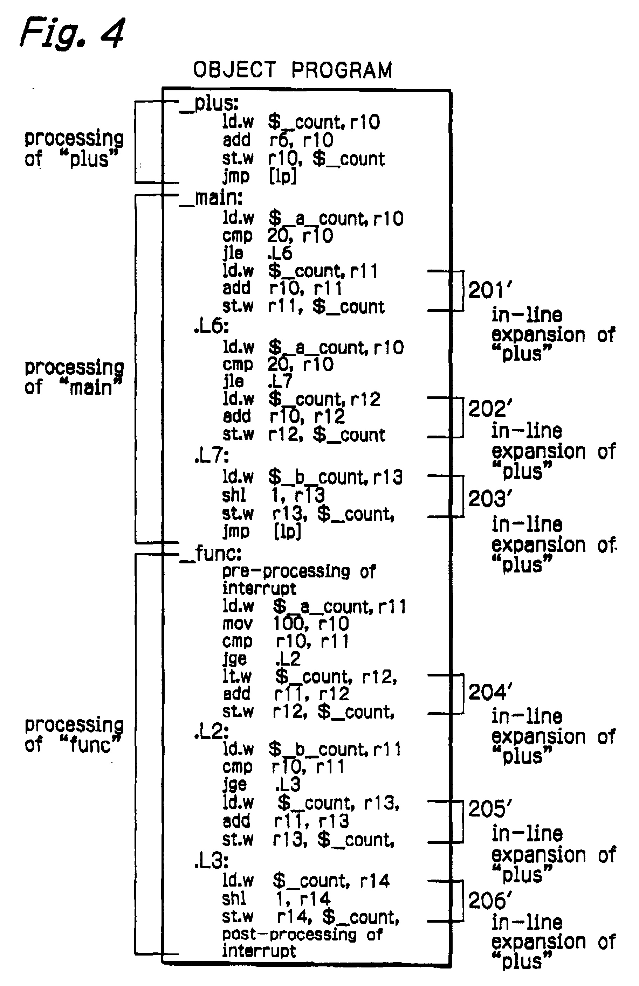

Additionally, when a source program written in the C language as shown in Fig. 2 is subjected to the speed optimization and compilation in the compiler 102, an object program as shown in Fig. 4 will be output.

Since an in-line expansion is performed in the compiler 102, statements 201 through 206 for calling Function "Plus" in the source program of Fig. 2 will be compiled into statements 201' through 206', respectively of Fig. 4 that are processed for in-line expansion.

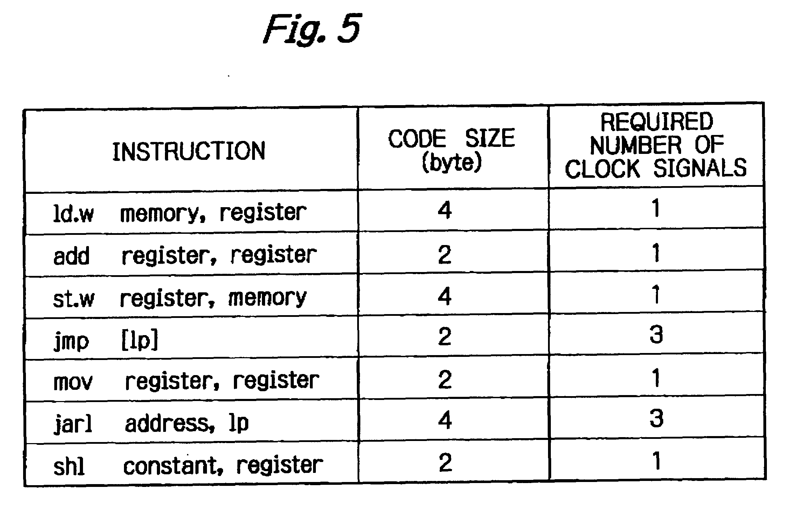

If the statements of the compiled program have code sizes and numbers of, clock signals required for execution, respectively, as listed in Fig. 5, the code size and the number of clock signals required for processing will be different for the size optimization and the speed optimization as described below from the viewpoint of calling function "plus".

In the case of the size optimization, the processing involving calling function "plus" will use a statement "mov" for setting an argument and a statement "jarl" for calling function "plus" and hence the code size will be (2+4) x 6 times = 36 bytes. The number of clock signals required for processing will be (1+3) x 6 times =24. Additionally, in the processing involving calling function "plus", (1+1+1+3) x 6 times = 36 will be necessary for processing function "plus" in addition to the number of clock signals required for executing the statements. Thus, all in all, a total of (24+36) = 60 clock signals will be necessary.

In the case of the speed optimization, on the other hand, the code size of statements "ld. w,", "add" and "st. w" for in-line expansion as shown in Fig. 4 will be (4+2+4) x 6 times = 60 bytes. The number of clock signals required for processing will be (1+1+1) x 6 times = 18 clock signals.

Thus, the code size will be 36 bytes and the number of clock signals required for processing will be 60 in the case of the size optimization, whereas the code size will be 60 bytes and the number of clock signals required for processing will be 18 in the case of the speed optimization.

As described above, due to the optimization techniques that are not adapted to optimize both the execution speed of an object program and the object size, the prior art compiler is typically designed either for the size optimization or for the speed optimization.

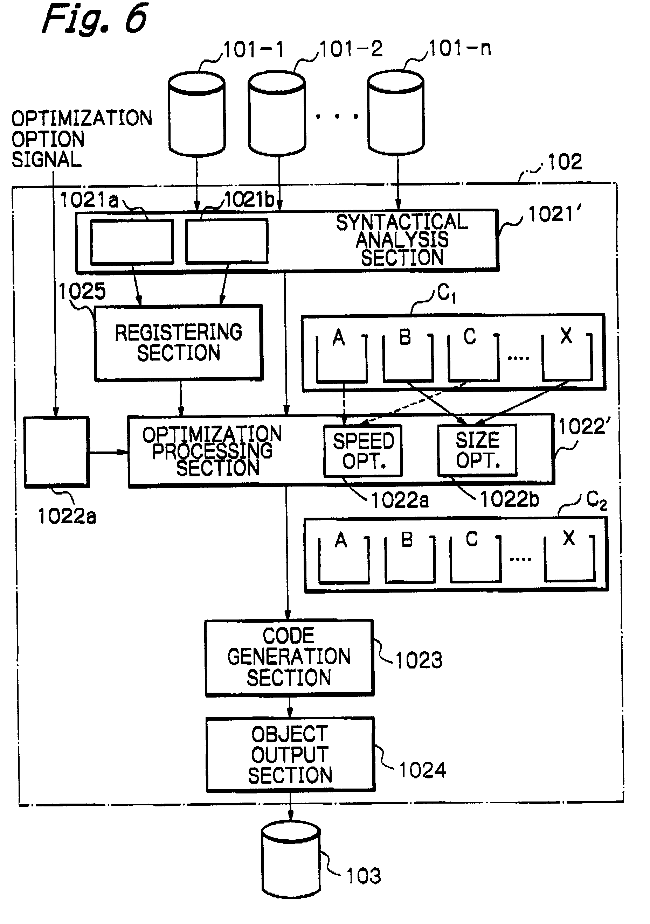

In Fig. 6, which illustrates an embodiment of the present invention, the syntactical analysis section 1021 of Fig. 1 is replaced by a syntactical analysis section 1021' which includes a speed optimization function recognition processing section 1021a for extracting a function to be processed for the speed optimization out of the source program and a function calling/relationship analysis section 1021b for finding out the combination of a function to be processed for the speed optimization and a function to be called by the function.

Also, a speed optimization processing function registering section 1025 registers a function to be processed for the speed optimization and a function to be called by the faction. Further, the optimization processing section 1022 of Fig. 1 is replaced by an optimization processing section 1022' which includes a speed optimization section 1022a for processing the registered functions for the speed optimization and a size optimization section 1022b for processing the remaining functions for the size optimization.

Here, assume that there are a plurality of source program files 101-1, 101-2, ···, 101-n.

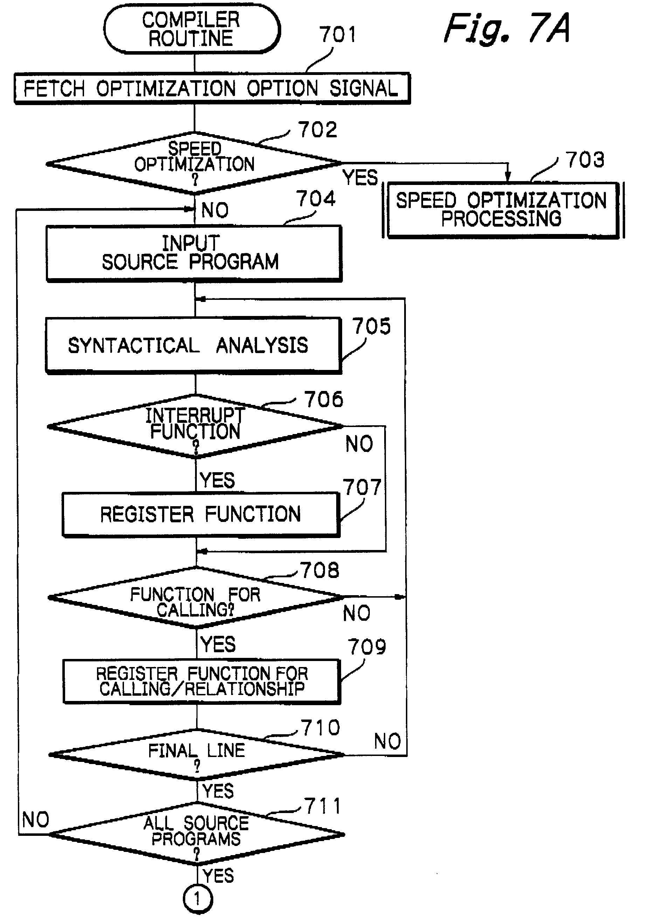

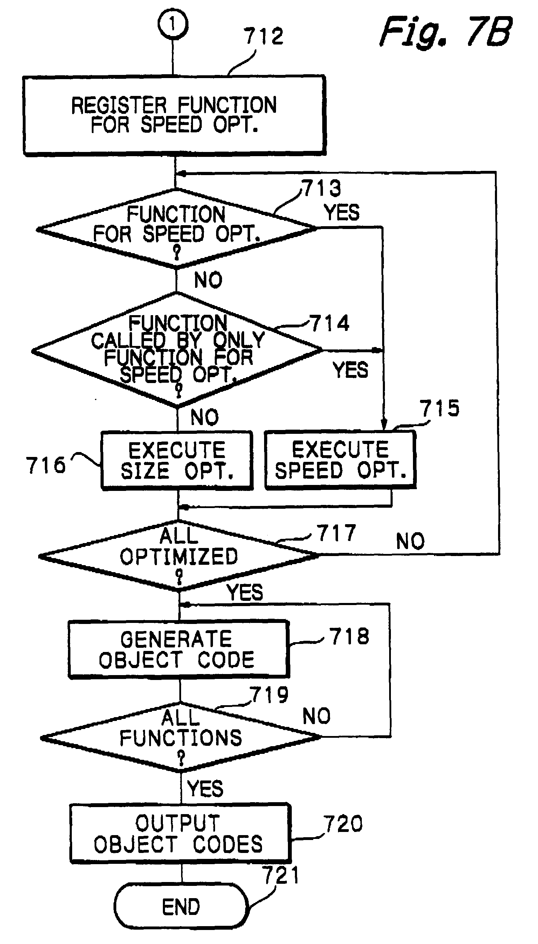

The operation of the compiler 102 of Fig. 6 is explained next in detail with reference to Figs. 7A and 7B.

First, at step 701, an optimization option signal is fetched from the exterior and is stored in the optimization selection section 1022a.

Next, at step 702, optimization processing section 1022' determines whether or not the optimization option signal designates a speed optimization processing. As a result, if a speed optimization processing is designated, the control proceeds form step 702 to step 703 which subjects all of the source programs of the source program Files 101-1, 101-2, ···, 101-n to a speed optimization processing. On the other hand, if a speed optimization processing is not designated, the control proceeds to step 704 where an optimization processing is executed upon completion of the syntactical analysis of the source programs by the syntactical analysis section 1021'.

At step 704, the syntactical analysis section 1021' inputs a source program from one of the source program files 101-1, 101-2, ···, 101-n.

Next, at step 705, a syntactical analysis is performed by the syntactical analysis section 1021' upon one line of the source program.

Next, at step 706, the speed optimization function recognition processing section 1021a determines whether the function being processed is an object of the speed optimization, i.e., an interrupt function. Only if the function is determined to be an interrupt function, does the control proceed to step 707 which registers this function in the speed optimization processing function registering section 1025 as an object of the speed optimization.

Next, at step 708, the function calling/relation ship analysis section 1021b determines whether or not the function being processed is a function for calling another function. Only if the function is determined to be such a function, does the control proceed to step 709 which registers the combination of the function being processed and the function to be called in the speed optimization processing registering function registering section 1025.

Step 710 repeats the operation at steps 705 through 709 until the syntactical anaysis upon the final line of the source program is completed.

Step 711 repeats the operation at steps 704 through 710 until the syntactical analysis upon all the source programs is completed.

Next, at step 712, the combination of the function that is the object of the speed optimization and the function to be called by it by referring to the function calling/relationship analysis section 1021b and the function to be called by the function that is the object of the speed optimization is also registered in the speed optimization processing function registering section 1025.

Next, at step 713, the optimization processing section 1022' determines whether or not the function being processed is a function that is an object of the speed optimization processing, i.e., an interrupt function. Also, at step 714, optimization processing section 1022' determines whether or not the function being processed is a function to be called only by the function that is the object of the speed optimization. As a result, if the determination at step 713 or 714 is affirmative, the control proceeds to step 715 where the speed optimization section 1022a performs a speed optimization operation on that function. Otherwise, the control proceeds to step 716 where the size optimization section 1022b performs an optimization operation other than a speed optimization operation, or a size optimization operation, on all the remaining functions.

Step 717 repeats the operation at steps 713 through 716 for all the functions of the intermediate code C₁ output from the syntactic analysis section 1021'.

Next, at step 718, the code generation section 1023 generates an object code for one of the functions of the second intermediate code C₂.

Step 719 repeats tile operation at step 718 for all the functions of the second intermediate code C₂.

At step 720, the object output section 1024 outputs the object code generated by the code generating section 1023 to the object module file 103.

Then, the routine of Figs. 7A and 7B is completed by step 721.

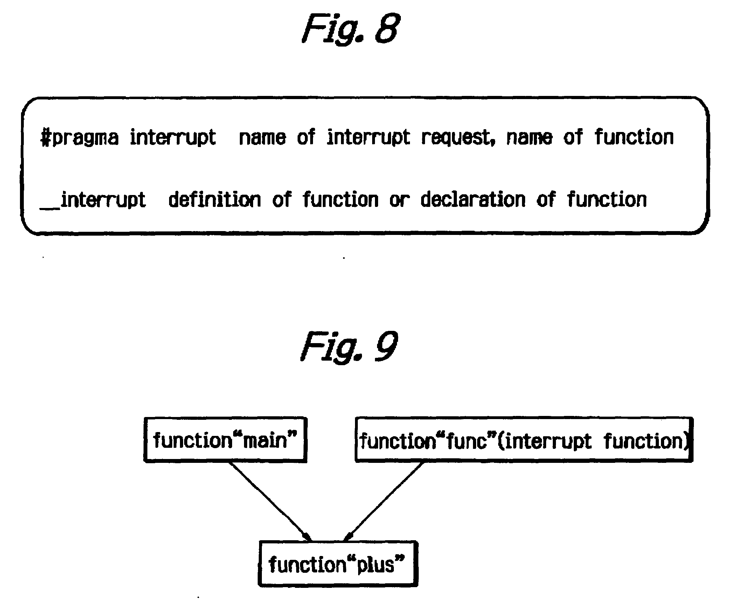

Note that the speed optimization function recognition processing section 1021a can extract intermediate code functions from a statement written in the C language as shown in Fig. 8. The statement of Fig. 8 is also described in NEC User's Manual "CA732/CA830/CA850 V800 Series C Compiler Package C Language".

When the compiler of the first embodiment is used to compile a source program written in the C language as shown in Fig. 2, the speed optimization function recognition processing section 1021a recognizes function "func" as an interrupt function on the basis of the declaration statement thereof, and the function calling/relationship analysis section 1021b recognizes the combination of function "func", function "main" and function "plus" as shown in Fig. 9.

Thus, it will be determined that function "func" is to be processed for the speed optimization and function "main" is to be processed for the size optimization, whereas function "plus" is to be processed also for the size optimization because it is called by both function "func" and function "main". Then, the optimization processing section 1022' optimizes the functions in a manner as determined above.

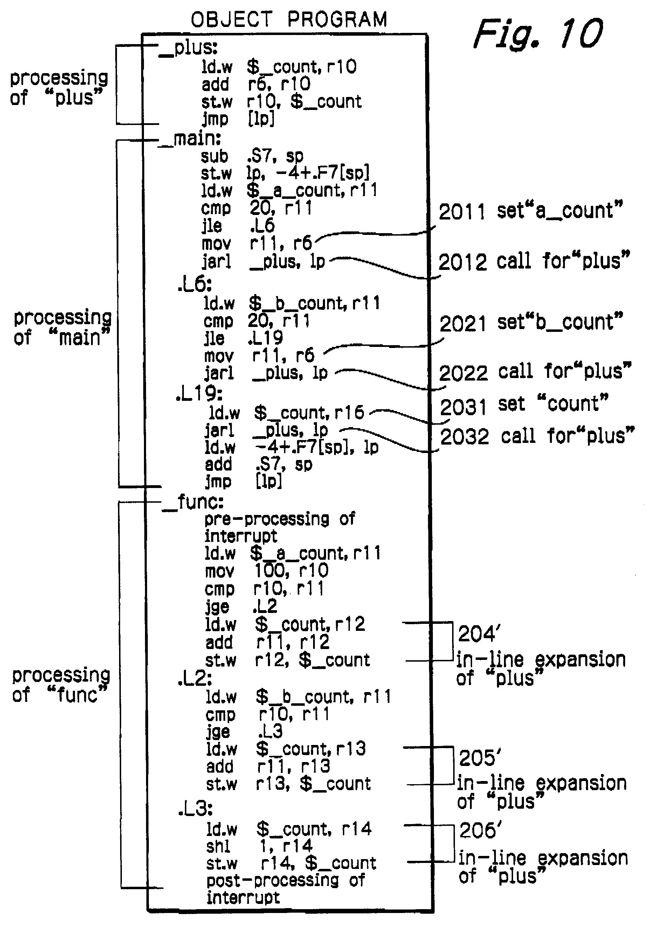

Fig. 10 shows the object program optimized in a manner as described above and output from the object output section 1024.

Referring to Fig. 10, no in-line expansion is performed upon function "main" because it is subjected to the size optimization and compiled into statements 2011, 2021 and 2031 for setting an argument and statements 2012, 2022 and 2032 for calling function "plus". On the other hand, an in-line expansion operation is performed upon function "func" because it is subjected to the speed optimization and compiled into in-line expanded statements 204' through 206'.

Assume that the code size of each of the statements of the compiled program and the number of clock signals required for executing it are as shown in Fig. 5. In this case, when an operation of in-line expansion will be performed for the processing operation of calling function "plus" to be executed for the operation of processing interrupt function "func", the code size will be 4+2+4 = 10 bytes, and the number of clock signals required for the processing will be 1+1+1 = 3.

Note that, with the prior art, in-line expansion is not realized for calling function "plus" but compiled into the statements for setting an argument and for calling function "plus" in order to uniformly perform the size optimization on all functions and the code size will be (2+4) = 6 bytes, while the number of clock signals required for the processing will be 1+3 = 4. When the processing time of function "plus" itself is added thereto, the total number of clock signals will be 10.

Thus, the code size of the compiler of the first embodiment is greater that that of the prior art compiler by 10-6 (= 4 bytes) x 3 times =12 bytes.

On the other hand, the number of clock signals required for processing interrupt function "func" in the compiler of the first embodiment will be smaller than the number of clock signals required in the prior art compiler by (10-3) x 3 times = 21.

Thus, in the first embodiment, functions for which the user wants to improve the execution speed such as interrupt functions are optimized for speed if the size optimization is directed to all of the source program files. Therefore, the size of the object module file can be minimized while processings requiring an improved execution speed realize a desired execution speed.

Additionally, when a function is specified for the speed optimization, a function to be called by that function is also optimized for speed so that the user is not required to pick up all the functions for which the user wants to improve the execution speed and write them in separate files and hence the overall design operation will be significantly improved.

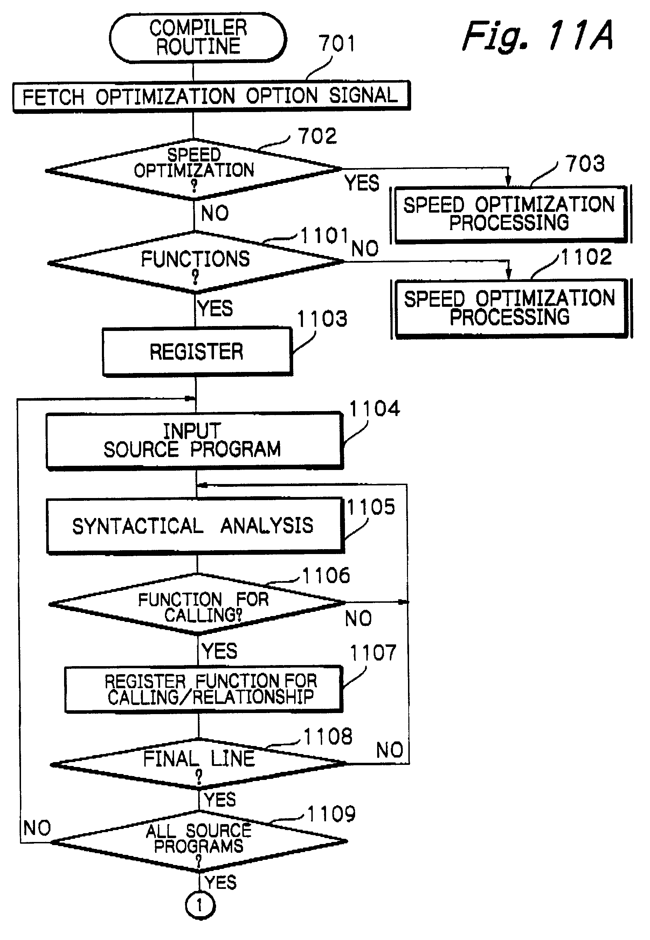

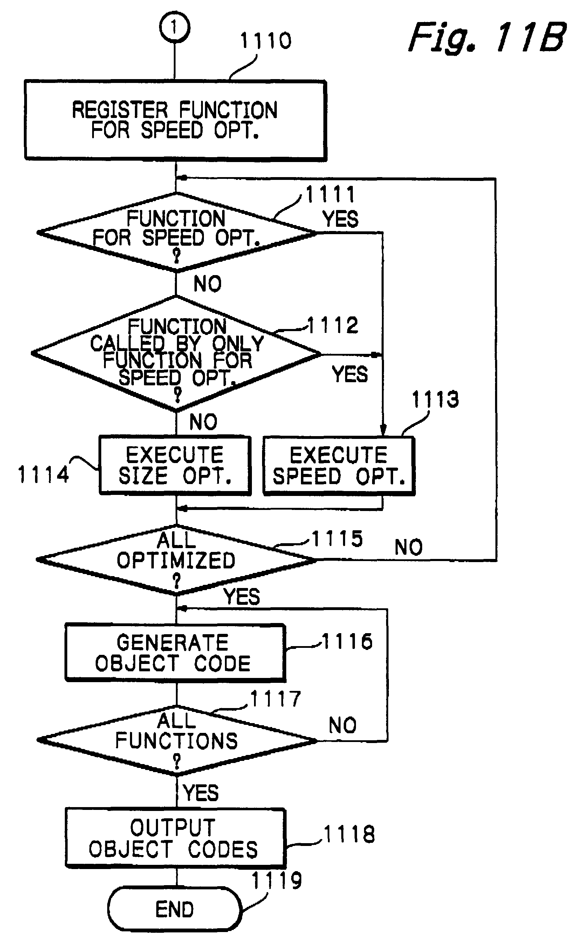

Figs. 11A and 11B are flowcharts for explaining another operation of the compiler 102 of Fig. 6.

First, at step 701, an optimization option signal is fetched from the exterior and is stored in the optimization selection section 1022a.

Next, at step 702, optimization processing section 1022' determines whether or not the optimization option signal designates a speed optimization processing. As a result, if a speed optimization processing is designated, the control proceeds from step 702 to step 703 which subjects all of the source programs of the source program files 101-1, 101-2, ···, 101-n to a speed optimization processing. On the other hand, if a speed optimization processing is not designated, the control proceeds to step 1101.

At step 1101, the optimization processing section 1022' determines whether or not functions to be optimized for speed are designated. As a result, if not, the same speed optimization processing on the interrupt functions as in steps 704 through 721 of Figs. 7A and 7B is carried out.

At step 1102, if a function to be optimized for speed is designated, the control proceeds to step 1103 which registers this function in the speed optimization processing function registering section 1025 as an object of the speed optimization.

At step 1104, the syntactical analysis section 1021' inputs a source program from one of the source program files 101-1, 101-2, ···, 101-n.

Next, at step 1105, a syntactical analysis is performed by the syntactical analysis section 1021' upon one line of the source program.

Next, at step 1106,the function calling/relation ship analysis section 1021b determines whether or not the function being processed is a function for calling another function, function. Only if the function is determind to be such a function, does the control proceed to step 1107 which registers the combination of the function to be processed and the function to be called in the speed optimization processing registering function registering section 1025.

Step 1108 repeats the operation at steps 1105 through 1107 until the syntactical anaysis upon the final line of the source program is completed.

Step 1109 repeats the operation at steps 1104 through 1108 until the syntactical analysts upon all the source programs is completed.

Steps 1110 through, 1119 correspond to step 712 through 721, respectively, of Fig. 7B.

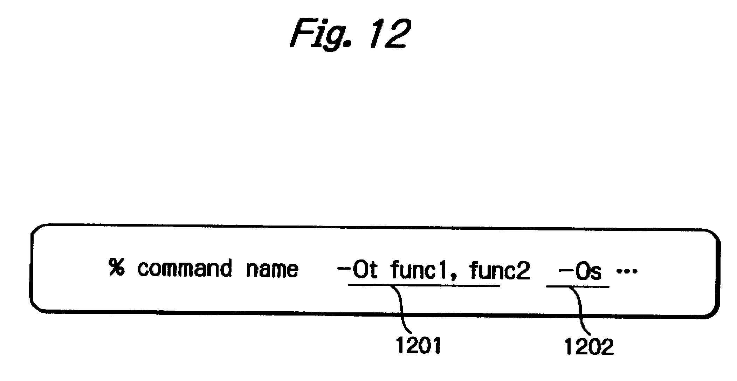

In Fig. 12, which shows an example of a optimization option signal, reference numeral 1201 denotes an optimization directive for executing a speed optimization processing on function "funcl" and function "func2", and 1202 denotes an optimization directive for executing a size optimization processing on all the objects.

Thus, with the second embodiment again, only those functions for with the user wants to improve the execution speed may be designated for the speed optimization in a manner as shown in Fig. 12 out of source program files in order to obtain the same object program as in the case of the first embodiment.

The processing operation to be performed by each of the components of the compiler according to the present invention can be carried out by a computer having a central processing unit (CPU). In this case, the computer will have to be provided with a storage medium storing programs for processing a language so that the translation from a source program into an object program and the optimization processing procedures may be executed by the programs stored in the recording medium. The recording medium may be a magnetic disc, a semiconductor memory or some other storage medium.

As explained herinabove, according to the present invention, functions for which the user wants to improve the execution speed such as interrupt functions can be optimized for speed even if size optimization is directed tothe all of source program files. Therefore, the size of the object module file can be minimized while processings requiring an improved execution speed such as interrupt processings realize a desired execution speed.

Additionally, when a function is designated for the speed optimization,a function to be called by that function is also optimized for speed so that the user is not required to pick up all the functions for which the user wants to improve the execution speed and write them in separate files and hence the overall design operation will be significantly improved.

## Claims

1. A compiler comprising:
a syntactical analysis section (1021') for performing a syntactical analysis upon source programs and generating an intermediate code (C₁);
a speed optimization function recognition processing section (1021a) for extracting a first function to be processed for speed optimization from said intermediate code;
a function calling/relationship analysis section (1021b) for finding a relationship between said first function and a second function to be called only by said first function;
a speed optimization processing function registering section (1025) for registering said first and second functions; and
an optimization processing section (1022') for performing a speed optimization processing upon functions of said intermediate code which coincide with one of said first and second functions, and performing a size optimization processing upon functions of said intermediate code which do not coincide with any of said first and second functions.

2. The compiler as set forth in claim 1, wherein said first function is an interrupt function to be processed for interruption.

3. A compiling method comprising the steps of:
performing a syntactical analysis upon source programs and generating an intermediate code (C₁);
extracting a first function to be processed for speed optimization from said intermediate code;
finding out a relationship between said first function and a second function to be called only by said first function;
registering said first and second functions; and
performing a speed optimization processing upon functions of said intermediate code which coincide with one of said first and second functions, and
performing a size optimization processing upon functions of said intermediate code which do not coincide with any of said first and second functions.

4. The compiling method as set forth in claim 3, wherein said first function is an interrupt function to be processed for interruption.
